Europäisches Patentamt

(19) European Patent Office

Office européen des brevets

(11) Veröffentlichungsnummer: **0 126 705**
**B1**

(12) EUROPÄISCHE PATENTSCHRIFT

(45) Veröffentlichungstag der Patentschrift:
07.02.90

(51) Int. Cl.⁵: **B 29 C 65/02, D 06 H 5/00**

(21) Anmeldenummer: 84710012.0

(22) Anmeldetag: 30.03.84

(54) Verfahren zum Verbinden von einseitig mit thermoplastischem Kunststoff beschichteten Gewebelagen, Verbinden nach dem Verfahren und Vorrichtung zur Durchführung des Verfahrens.

(30) Priorität: 20.05.83 DE 3318471

(43) Veröffentlichungstag der Anmeldung:
28.11.84 Patentblatt 84/48

(45) Bekanntmachung des Hinweises auf die Patenterteilung:
07.02.90 Patentblatt 90/06

(84) Bennante Vertragsstaaten:
CH DE FR GB IT LI

(56) Entgegenhaltungen:
EP-A-0 032 703
DE-A-2 033 830
FR-A-2 022 746
FR-A-2 449 743
FR-A-2 501 569
GB-A-977 367
GB-A-2 071 564
US-A-3 172 798
US-A-3 402 089
US-A-3 695 971

(73) Patentinhaber: Pfaff Industriemaschinen GmbH
Königstrasse 154
D-6750 Kaiserslautern (DE)

(72) Erfinder: Emrich, Reinhard
Otterberger Strasse 41
D-6750 Kaiserslautern 27 (DE)
Erfinder: Appel, Kurt
Hauptstrasse 35
D-6791 Reichenbach-Steegen 2 (DE)

(74) Vertreter: Klein, Friedrich
Königstrasse 154
D-6750 Kaiserslautern (DE)

## Beschreibung

Die Erfindung betrifft ein Verfahren nach dem Oberbegriff des Patentanspruchs 1, eine nach dem Verfahren hergestellte Verbindung und einen Umleger zur Durchführung des Verfahrens.

Wasserdichte Wetter-, Arbeitsschutz- und Sportkleidung wird aus Gründen der Hautfreundlichkeit zur Vermeidung von Kondenswasserbildung beim Tragen vorwiegend aus einseitig mit thermoplastischem Kunststoff beschichteten Trägergeweben hergestellt. Bei der Zelt- und Schutzplanenherstellung sind Kostengründe für die Verwendung solcher Schichtgewebe maßgebend.

Zum Verbinden einseitig beschichteter Gewebelagen bei der Konfektionierung sind mehrere Verfahren bekannt.

Zunächst das Verbinden durch Nähen. Es wird durch die Naht zwar eine feste und dauerhafte Verbindung erzielt, jedoch geht dadurch der größte Vorteil beschichteter Gewebe, die absolute Wasserdichtigkeit, verloren, so daß die Naht in einem zusätzlichen zeitaufwendigen und in der Wirkung unbefriedigenden Arbeitsgang nachträglich beispielsweise durch Aufschweißen eines Abdeckbandes abgedichtet werden muß.

Die Verbindung kann auch durch Heizkeil-Hochfrequenz- oder Heißgasschweißen hergestellt werden, indem die beschichteten Materialseiten miteinander verbunden werden.

Obwohl diese an sich materialgerechte Verbindung in einem kontinuierlichen Arbeitsgang herstellbar ist, wird sie relativ selten verwendet, weil ihre Festigkeit durch die Haftung der Beschichtung auf dem Trägergewebe begrenzt ist und die Anforderungen in den verschiedenen Anwendungsgebieten meistens höher liegen. Darüber hinaus sind die Schnittkanten der Gewebelagen bei dieser Verbindung gegen Ausfransen nicht gesichert.

Nach einem durch die US-PS-3 172 798 bekannten weiteren Verfahren werden zum Herstellen einer Verbindung die beiden Gewebelagen und ein Thermoplaststreifen in dieser Reihenfolge übereinanderliegend zunächst zusammengenäht, die obere Gewebelage wird um den Thermoplaststreifen um 180° umgefaltet, so daß der Streifen in der gebildeten Umschlagfalte innen liegt. Sodann werden die übereinanderliegenden Lagen im Hochfrequenz-Schweißverfahren miteinander verschweißt. Dabei muß das Werkstück abschnittsweise positioniert und geschweißt werden. Die Arbeitsweise erfolgt also taktweise und ist daher recht zeitraubend. Das Schweißen bestimmter Rundungen macht darüber hinaus entweder den Wechsel von Schweißwerkzeugen erforderlich oder es können nur relativ kurze Werkzeuge eingesetzt werden. Da der Faden bei hoher Beanspruchung in den Nadeldurchstichlöchern arbeitet, können trotz Hochfrequenzschweißung Undichtigkeiten auftreten.

Weiterhin ist durch die DE-AS-2 033 830 ein Verfahren bekannt, nach dem zwischen die zu verbindenden überlappt liegenden Ränder der beschichteten Materiallagen ein über die beiden Randkanten hinausragender Streifen aus thermoplastischem Kunststoff eingelegt und durch eine oder mehrere Nähte die Materiallagen und der Streifen zu einem Verbund zusammengenäht werden. Der eine Rand oder beide herausragenden Ränder des Streifens werden dann umgebogen, über die vernähten, doppelten Lagen des Verbundes gelegt und dort mit dem oder den beschichteten Materiallagen durch Hochfrequenzscheißung verschweißt.

Die nach diesem Verfahren hergestellte Verbindung ist zwar von guter Qualität und läßt Dauerfestigkeit erwarten, jedoch ist diese Verbindung insbesondere für Bekleidung nicht geeignet, weil sie eine sehr starke Verdickung in den Materialbahnen bildet, die nicht biegeelastisch und geschmeidig genug ist.

Schließlich ist durch die GB-A-2 071 564 ein Verfahren zum Verbinden der Ränder von zwei einseitig beschichteten Materiallagen bekannt, bei dem ein schweißbarer Streifen zunächst U-förmig um den Randbereich der aufeinanderliegenden Materiallagen gefaltet und mit ihnen durch eine Nähnaht verbunden wird, worauf der eine freie Rand des Streifens zum Überdecken der Nähnaht um 180° nach oben umgeschlagen, sodann die untenliegende Materiallage zusammen mit dem anderen freien Rand des Streifens zum Überdecken der Nähnaht um 180° nach unten umgeschlagen und schließlich in dieser Lage entweder unter Benutzung einer Hochfrequenz-Schweißvorrichtung, die den Nähnahtbereich freiläßt, oder durch Zufuhr von Ultraschallenergie so verschweißt werden, daß die Ränder der Materiallagen abgedeckt sind und die Nähnaht versiegelt ist.

Die Herstellung dieser durchaus wasserdichten Verbindung erfordert allerdings mehrere diskontinuierlich ablaufende Arbeitsgänge an verschiedenen Arbeitsstellen und ist dadurch recht zeitaufwendig. Außerdem wird die Festigkeit der Verbindung beim Gebrauch des fertigen Erzeugnisses beeinträchtigt, weil die Nähfäden bei Belastung in den Nadeldurchstichlöchern arbeiten. Auch ist die Verarbeitung von Rundungen und Materiallagen mit wechselndem Kantenverlauf, wie z. B. bei Bekleidungszuschnitten äußerst problematisch.

Der Erfindung liegt die Aufgabe zugrunde, ein Verfahren zum Verbinden von einseitig beschichteten Materiallagen unter Verwendung eines schweißbaren Kunststoffstreifens zu entwickeln, nach dem besonders haltbare, flache, wasserdichte Verbindungen mit relativ hoher Vorschubgeschwindigkeit kontinuierlich herstellbar sind.

Diese Aufgabe wird durch das Verfahren nach Anspruch 1 gelöst.

Beim Vorgehen nach dem erfindungsgemäßen Verfahren kann eine Perforation der Materiallagen durch Nähen entfallen. Die mit dem Nähen verbundenen Nachteile werden vermieden, weil durch die innige Verbindung aller sich gegenüberliegenden Schichten die Verbindung eine gleich gute Festigkeit wie eine durch Nähen und Schweißen hergestellte Verbindung hat. Sie ist auch reinigungsbeständig, womit eine wichtige Forderung aus beschichtetem Material erfüllt wird. Ein weiterer Vorteil besteht darin, daß die Verbindung keiner Schälwirkung unterworfen ist und daher eine wesentlich höhere Zugfestigkeit als die bisher üblichen sogenannten Schälnähte hat. Das sind Nähte, bei denen die beiden Materiallagen mit der beschichteten Seite aufeinanderliegend verschweißt wurden.

Durch die Anwendung des Verfahrens nach Anspruch 2 wird die Festigkeit der Verbindung nach Anspruch 1 weiter erhöht.

Die Merkmale der nach den Verfahren nach Anspruch 1 und 2 hergestellten Verbindung sind in den Ansprüchen 3 und 4 wiedergegeben. Anspruch 5 und 6 betreffen einen Umleger zur Durchführung der Verfahren nach Anspruch 1 bzw. 2.

Das erfindungsgemäße Verfahren und die Vorrichtung zu dessen Durchführung sind anhand eines in der beigefügten Zeichnung dargestellten Ausführungsbeispieles der Verbindung und des Umlegers näher beschrieben.

Es zeigt:

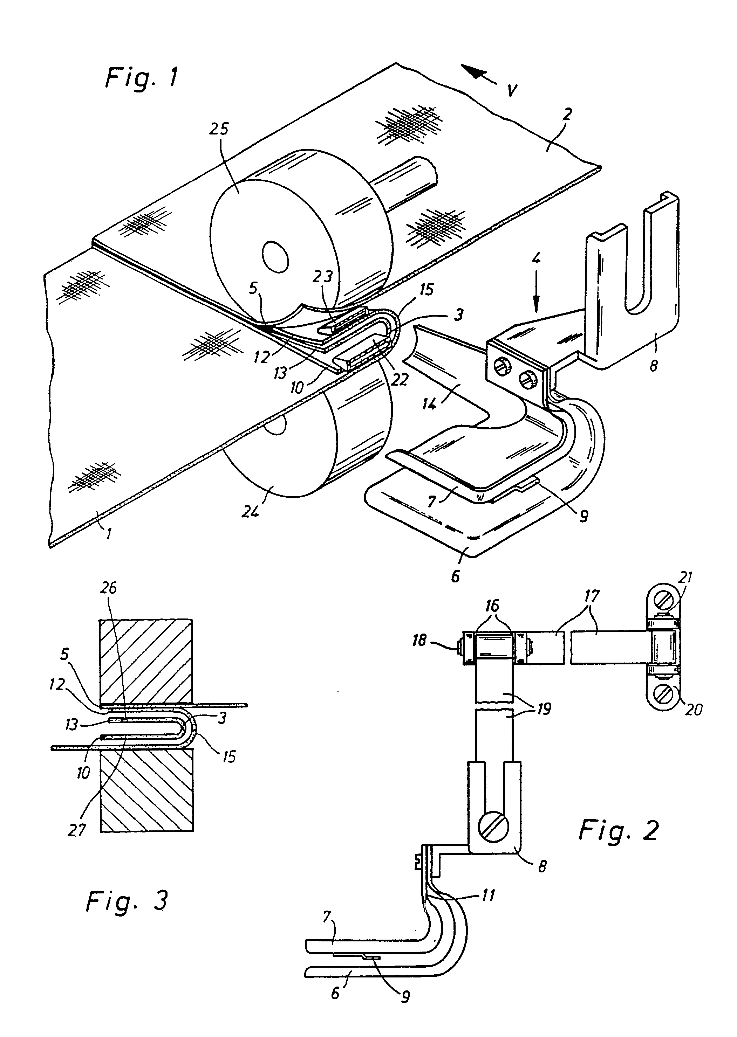

Fig. 1 in vereinfachter Darstellung die gegenseitige Zuordnung der zu verbindenden Materialbestandteile, die Anordnung des Umlegers und der Heißluft- bzw. Heißgasdüsen sowie ein Druckrollenpaar,

Fig. 2 eine Ansicht des an einem Ausleger mit Tragarm angeordneten Umlegers und

Fig. 3 die Verbindung der Materiallagen und des Kunststoffstreifens im Schnitt.

Die beiden zu verbindenden, einseitig mit einem thermoplastischen Kunststoff beschichteten Materiallagen sind mit 1 und 2 bezeichnet. Die Trägergewebe können aus synthetischen oder natürlichen Fasern in beliebiger Bindung (Leinwand, Körper oder dgl.) bestehen. Die Beschichtung kann nach einem der bekannten Verfahren vorgenommen sein und aus Polyurethan, Polyvenylchlorid oder anderen thermoplastischen Kunststoffen bestehen. Der in der Zeichnung mit 3 bezeichnete Kunststoffstreifen zum Verbinden der Materiallagen 1 und 2 soll aus gleichen oder sehr ähnlichen Kunststoff-Zusammensetzungen wie die Beschichtung sein. Beim vorliegenden Verfahren wird ein Kunststoffstreifen verwendet, der auf einer Seite mit einem durch Wärme reaktivierbaren Klebstoff beschichtet ist, womit eine bessere Bindung mit dem Trägergewebe erreicht wird.

Zur Verschweißung kann praktisch jedes beliebige bekannte Kunststoffschweißverfahren angewendet werden. Wegen der flüssigeren und schnelleren Arbeitsweise sind für das vorliegende Verfahren das Heizkeil- und Heißluft- oder Heißgasschweißen dem Hochfrequenzschweißen vorzuziehen.

Als Hilfsmittel zum Umfalten und Führen der ersten Materiallage 1 und des Kunststoffstreifens 3 sind ein mit 4 bezeichneter Umleger und zum Führen der Randkante 5 der zweiten Materiallage 2 eine nicht dargestellte Kantenführung vorgesehen.

Der Umleger 4 für den Rand der ersten Materiallage besteht aus zwei Leitblechen 6, 7, die an einem Träger 8 befestigt sind. An der Innenseite des Leitbleches 7 ist eine Kantenführung 9 für die eine Randkante 10 des Kunststoffstreifens 3 zum Beispiel durch Löten befestigt. Im oberen Bereich weist das Leitblech 7 eine gemeinsame Kantenführung 1 für die Randkante 12 des umgeschlagenen Randes der ersten Materiallage und die andere Randkante 13 des Kunststoffstreifens 3 auf. Die in der Zeichnung linke und die Einlaufseite der Leitbleche 6, 7 sind zur einfacheren Einführung der Materialbestandteile aufgebogen. Das untere Leitblech 6 weist einen sich in Vorschubrichtung, Pfeil V, erstreckenden Fortsatz 14 auf, der als Führungsmittel für die äußere Faltkante 15 der Materiallage 1 dient.

Um das Einführen und Entnehmen der Materiallagen 1, 2 und des Kunststoffstreifens 3 zu erleichtern, ist der Umleger 4 an einem in einer Gabelöffnung 16 eines Tragarms 17 um einen horizontalen Bolzen 18 schwenkbar gelagerten Ausleger 19 befestigt. Der Tragarm 17 seinerseits ist an einem am Maschinengehäuse zu befestigenden Lagerbock 20 um einen vertikalen Bolzen 21 schwenkbar angeordnet.

Zur Erhitzung der miteinander zu verklebenden bzw. zu verschweißenden Schichten der beiden Materiallagen 1, 2 mit dem Kunststoffstreifen 3 dienen zwei im Ausführungsbeispiel als bekannte Heißgas- oder Heißluftdüsen ausgebildete Heizelemente 22, 23, von denen das eine im Inneren des längsgefalteten, in der Umschlagfalte der ersten Materiallage 1 angeordneten Kunststoffstreifens 3 und das andere 23 zwischen der beschichteten Seite der zweiten Materiallage 2 und der beschichteten Seite des umgefalteten Randes der ersten Materiallage 1 angeordnet ist. Die Heißgasdüsen 22, 23 sind über einen hohlen Schaft mit einem nicht dargestellten Heißluftgebläse verbunden und können an einem Träger zwischen einer Arbeits- und einer Ruhestellung bewegbar angeordnet sein.

Den Heizelementen 22, 23 ist ein federbelastetes Druckrollenpaar 24, 25 nachgeordnet, das in bekannter Weise angetrieben ist, die miteinander zu verklebenden bzw. zu verschweißenden Zonen fest zusammenpreßt und die Bestandteile kontinuierlich in Vorschubrichtung, Pfeil V, transportiert.

Die Arbeitsweise ist wie folgt:

Zunächst wird die Randzone der mit der Gewebeseite nach oben liegenden ersten Materiallage zwischen die Leitbleche 6, 7 des Umlegers 4 eingeführt und dabei zur Gewebeseite hin zu einer seitlich offenen Umschlagfalte U-förmigen Querschnitts geformt, wobei die Randkante 12 an der Kantenführung 11 und die Umschlagkante 15 am Fortsatz 14 des Leitbleches 6 anliegt. Sodann wird der Streifen 3 zwischen die Schenkel der Umschlagfalte mit der klebstoffbeschichteten Seite zur Gewebeseite der Materiallage 1 hin und

mit der einen Randkante, 13, an der Kantenführung 11 des Leitbleches 7 anliegend sowie mit der anderen Randkante, 10, in die eine gabelförmige Führung bildende Kantenführung 9 am Leitblech 7 ragend und an deren innerer Führungskante anliegend in den Umleger 4 eingeführt und dabei der Länge nach zu einem ebenfalls seitlich offenen U mit ungleich langen Schenkeln 26, 27 gefaltet. Der untere Schenkel 27 ragt dabei um einige Millimeter über die Randkante 12 des umgeschlagenen Randes der ersten Materiallage 1 hinaus.

Die zweite Materiallage 2 wird dann mit der beschichteten Seite nach unten und mit ihrer Randkante 5 deckungsgleich mit der Randkante 12 über den umgeschlagenen Rand der ersten Materiallage 1 zugeführt. Die Heißgasdüse 23 wird sodann zwischen die zweite Materiallage 2 und den umgeschlagenen Rand der Materiallage 1 und die Heißgasdüse 24 zwischen die Schenkel 26, 27 des längsgefalteten Streifens 3 eingebracht. Durch das aus der Düse 23 ausströmende Heizmedium werden die Kunststoffbeschichtung des Randes der Materiallage 2 und des umgeschlagenen Randes der Materiallage 1 plastifiziert und durch das aus der Düse 24 ausströmende Heizmedium wird der Streifen 3 von innen heraus plastifiziert und die Klebstoffbeschichtung wird reaktiviert. Die erweichten Schichten werden durch die angetriebenen federbelasteten Druckrollen 24, 25 fest zusammengepreßt und erkalten. Es entsteht auf diese Weise eine wasserdichte, hochbelastbare, innige Verbindung zwischen den sich gegenüberliegenden Schichten in einem kontinuierlichen Arbeitsgang.

**Patentansprüche**

1. Verfahren zum Verbinden der Ränder von einseitig beschichteten Materiallagen (1, 2) bei dem ein gefalteter Streifen (3) aus thermoplastischem Kunststoff in die Verbindung eingearbeitet wird und die zu verbinenden Ränder und der Streifen erhitzt und zusammengepreßt werden, dadurch gekennzeichnet, daß der zu verbindende Rand der ersten Materiallage (1) zur unbeschichteten Seite hin um 180° umgeschlagen, der einseitig mit durch Wärme reaktivierbarem Klebstoff beschichteter Streifen (3) längsgefaltet und mit der kleberbeschichteten Seite an den unbeschichteten Seiten des umgeschlagenen Randes der ersten Materiallage (1) anliegend in den umgeschlagenen Rand der ersten Materiallage (1) eingebracht und der Rand der zweiten Materiallage (2) mit der beschichteten Seite gegen die beschichtete Seite des umgeschlagenen Randes der ersten Materiallage (1) zugeführt wird, und daß der Streifen (3) von der Mitte aus und die Ränder der beiden Materiallagen (1, 2) zwischen den beschichteten Seiten erhitzt werden, worauf die Ränder und der Streifen (3) zusammengepreßt und dabei kontinuierlich verklebt und verschweißt werden.

2. Verfahren nach Anspruch 1, dadurch gekennzeichnet, daß der Streifen (3) mit ungleich langen Schenkeln (26, 27) längsgefaltet, mit dem längeren Schenkel (27) über die Randkante (12) des umgeschlagenen Randes der ersten Materiallage (1) hinausragend zugeführt und mit den beiden Materiallagen (1, 2) verbunden wird.

3. Verbindung der Ränder zweier einseitig beschichteten Materiallagen, in die ein gefalteter Streifen aus schweißbarem Kunststoff eingearbeitet ist, dadurch gekennzeichnet, daß der Randbereich der ersten Materiallage (1) zur unbeschichteten Seite hin um 180° umgeschlagen, in dem umgeschlagenen Rand ein U-förmig gefalteter, einseitig mit Klebstoff beschichteter Streifen (3) aus thermoplastischem Kunststoff mit der kleberbeschichteten Seite an den unbeschichteten Seiten des umgeschlagenen Randes anliegend angeordnet ist und der Randbereich der zweiten Materiallage (2) an der beschichteten Seite des umgeschlagenen Randes der ersten Materiallage (1) anliegt, wobei jede Schicht mit der ihr gegenüberliegenden Schicht dauerhaft verbunden ist.

4. Verbindung nach Anspruch 3, dadurch gekennzeichnet, daß der Streifen (3) ungleich lange Schenkel (26, 27) aufweist, von denen der längere (27) über die Randkante (12) des umgeschlagenen Randes der ersten Materiallage (1) hinausragt und mit den beiden Materiallagen (1, 2) dauerhaft verbunden ist.

5. Umleger zur Durchführung des Verfahrens nach Anspruch 1, der im Inneren eine Kantenführung (9) für eine Randkante (10) des Streifens (3) aufweist.

6. Umleger zur Durchführung des Verfahrens nach Anspruch 2, der zwei seitlich zueinander versetzte Kantenführungen (9, 11) für den Streifen (3) aufweist, von denen die eine Kanteführung (9) gegenüber der Randkante (12) des umgefalteten Randes der ersten Materiallage (1) seitlich versetzt ist.

**Claims**

1. Method for joining the edges of singlesidedly coated layers of material (1, 2) wherein a folded strip (3) of thermo-plastics material is worked into the join and the edges to be joined and the strips are heated and pressed together, characterised in that the first material layer's edge to be joined (1) is folded over towards the uncoated side by 180°; the strip (3) which is singlesidedly coated with a heat-reactivatable adhesive is longitudinally folded and placed in the folded edge of the first layer of material (1) whereby the adhesive-coated side abuts against the uncoated sides of the folded edge of the first layer of material (1); and the edge of the second layer of material (2) is placed with the coated side against the coated side of the folded edge of the first layer of material (1); and the strip (3) is heated from the centre and the edges of the two layers of material (1, 2) between the coated sides whereupon the edges and the strip (3) are pressed together to be continuously glued and welded together.

2. Method according to claim 1, characterised in that the strip (3) including shanks (26, 27) of unequal length is longitudinally folded and placed with the longer shank (27) extending over the lateral edge (12) of the folded edge of the first layer of material (1) and joined with the two layers of material (1, 2).

3. Joining of the edges of two singlesidedly coated layers of material into which a folded strip of weldable plastics material is placed, characterised in that the edge region of the first layer of material (1) is folded by 180° towards the uncoated side; a U-shape folded, singlesidedly adhesive-coated strip (3) of thermo-plastics material is disposed in the folded edge with the adhesive-coated side abutting against the uncoated sides of the folded edges; and the edge region of the second layer of material (2) abuts against the coated side of the folded edge of the first layer of material (1) whereby each layer is permanently joined with its opposite layer.

4. Joining according to claim 3, characterised in that the strip (3) has shanks (26, 27) of unequal length, with the longer shank (27) extending over the lateral edge (12) of the folded edge of the first layer of material (1) and is permanently joined with the two layers of material (1, 2).

5. Folding means to execute the method according to claim 1, including an internally disposed edge guide (9) for a border edge (10) of the strip (3).

6. Folding means to execute the method according to claim 2, including two edge guides (9, 11) for the strip (3), which guides are laterally offset relative to one another and of which the one edge guide (9) is laterally offset relative to the lateral edge (12) of the folded edge of the first layer of material (1).

**Revendications**

1. Procédé de liaison de bandes textiles (1, 2) enduites d'un côté, selon lequel une bande repliée (3) de matière thermoplastique est incorporée dans la liaison, et les bords à lier ainsi que la bande thermoplastique sont chauffés et pressés les uns contre l'autre, caractérisé en ce que le bord à lier de la première bande textile (1) est rabattu à 180° du côté non enduit, la bande (3), enduite de colle réactivable par la chaleur, est repliée longitudinalement et incorporée dans le bord rabattu de la première bande textile (1) avec son côté enduit de colle appliqué contre les côtés non enduits du bord rabattu de la première bande textile (1), et le bord de la deuxième bande textile (2) est amené avec son côté enduit contre le côté enduit du bord rabattu de la première bande textile (1), et en ce que la bande (3) est chauffée à partir du milieu et les bords des deux bandes textiles (1, 2) sont chauffés entre les côtés enduits, à la suite de quoi les bords et la bande (3) sont pressés les uns contre l'autre, et sont alors collés et soudés en continu.

2. Procédé selon la revendication 1, caractérisé en ce que la bande (3) est repliée longitudinalement en branches (26, 27) de longueurs différentes, la branche la plus longue (27) étant amenée en dépassement de l'arête (12) du bord rabattu de la première bande textile (1), et liée aux deux bandes textiles (1, 2).

3. Liaison des bords de deux bandes textiles enduites d'un côté, dans laquelle est incorporée une bande repliée de matière plastique soudable, caractérisée en ce que la région de bord de la première bande textile (1) est rabattue à 180° du côté non enduit, une bande (3) de matière thermoplastique, repliée en forme de U et enduite de colle d'un côté, est disposée dans le bord rabattu avec son côté enduit de colle appliqué contre les côtés non enduits du bord rabattu, et la région de bord de la deuxième bande textile (2) s'applique contre le côté enduit du bord rabattu de la première bande textile (1), chaque bande étant liée de manière durable à la bande qui lui fait face.

4. Liaison selon la revendication 3, caractérisée en ce que la bande (3) présente des branches (26, 27) de longueurs différentes, la branche la plus longue (27) dépassant de l'arête (12) du bord rabattu de la première bande textile (1), et étant liée de manière durable aux deux bandes textiles (1, 2).

5. Dispositif de repliage pour la mise en oeuvre du procédé selon la revendication 1, qui présente à l'intérieur un guide d'arête (9) pour une arête de bord (10) de la bande (3).

6. Dispositif de repliage pour la mise en oeuvre de procédé selon la revendication 2, qui présente deux guides d'arêtes (9, 11) pour la bande (3), latéralement décalés l'un par rapport à l'autre, un de ces guides d'arêtes (9) étant latéralement décalé par rapport à l'arête (12) du bord replié de la première bande textile (1).

*Fig. 1*

*Fig. 2*

*Fig. 3*

1